# EUROPÄISCHE PATENTSCHRIFT

(11) **EP 0 475 283 B1**
(45) Veröffentlichungstag und Bekanntmachung des Hinweises auf die Patenterteilung: **02.08.1995**
(21) Anmeldenummer: 91115026.6
(22) Anmeldetag: 05.09.1991
(51) Int. Cl.: F16D 13/68, F16F 15/12

(54) **Kupplungsscheibe**
Clutch disc
Disque d'embrayage

(30) Priorität: 08.09.1990 DE 4028616
(43) Veröffentlichungstag der Anmeldung: 18.03.1992
(73) Patentinhaber: Fichtel & Sachs AG, D-97419 Schweinfurt (DE)
(72) Erfinder: Fischer, Matthias, W-8735 Eltingshausen (DE); Jeppe, Harald, W-8720 Schweinfurt (DE); Rudolph, Gerda, W-8720 Schweinfurt (DE)
(74) Vertreter: Liska, Horst, Dr.-Ing.

(56) Entgegenhaltungen:
- DE-A- 3 228 515
- FR-A- 2 503 295
- FR-A- 2 544 426
- FR-A- 2 616 499
- FR-A- 2 648 884

## Beschreibung

Die Erfindung betrifft eine Kupplungsscheibe für eine Kraftfahrzeug-Reibungskupplung.

Aus der DE-A-32 28 515 sowie der FR-A-2 503 295 sind Kupplungsscheiben für Kraftfahrzeug-Reibungskupplungen bekannt, die jeweils einen für den Leerlaufbetrieb bemessenen Torsionsschwingungsdämpfer und einen für den Lastbetrieb bemessenen Torsionsschwingungsdämpfer umfassen. Der Lastdämpfer umfaßt ein im wesentlichen radial von einer Nabe der Kupplungsscheibe abstehendes Scheibenelement und zwei auf axial sich gegenüberliegenden Seiten des Scheibenelements angeordnete, fest miteinander verbundene und relativ zum Scheibenelement um die Drehachse der Nabe drehbare Seitenscheiben, von denen eine einen Reibbelagträger der Kupplungsscheibe bildet. In Fenstern eines radial äußeren Teils des Scheibenelements einerseits und der beiden Seitenscheiben andererseits sind für den Lastbetrieb bemessene erste Federn angeordnet, die die Seitenscheiben drehelastisch mit dem äußeren Teil des Scheibenelements kuppln. Der Leerlaufdämpfer umfaßt in Fenstern eines radial inneren Teils des Scheibenelements angeordnete, für den Leerlaufbetrieb bemessene zweite Federn, die den radial inneren Teil des Scheibenelements drehelastisch mit dem Drehmomentübertragungsweg des Lastdämpfers kuppeln. Bei der Kupplungsscheibe der DE-A-32 28 515 sind der radial innere Teil und der radial äußere Teil des Scheibenelements zu einem einteiligen Nabenflansch verbunden, so daß die Federn des Leerlaufdämpfers nicht nur im Leerlaufbetrieb sondern auch im Lastbetrieb beansprucht werden. Bei der Kupplungsscheibe der FR-A-2 503 295 ist der radial äußere Teil des Scheibenelements über eine Verzahnung mit Drehspiel an den radial inneren Teil gekuppelt und zwar so, daß der Leerlaufdämpfer nach Ausgleich des Drehspiels überbrückt ist. Der Leerlaufdämpfer ist hierbei in Serie zum Lastdämpfer geschaltet. Die bekannten Kupplungsscheiben haben jeweils für den Lastbetrieb bemessene Reibmittel.

Aus der FR-A-2 544 426 ist eine Kupplungsscheibe bekannt, welche ein fest mit der Nabe verbundenes Scheibenelement, eine Zwischeneinheit sowie die den Reibbelag tragenden Seitenscheiben umfaßt. Für den Leerlaufbetrieb bemessene Dämpf- und Reibmittel sind zwischen dem Scheibenelement und der Zwischeneinheit, für den Lastbetrieb bemessene Dämpf- und Reibmittel sind zwischen der Zwischeneinheit und den Seitenscheiben angebracht. Die Zwischeneinheit und die Seitenscheiben werden jeweils durch verschiedene, voneinander unabhängige Elemente axial bzw. radial geführt.

Es ist Aufgabe der Erfindung, eine Kupplungsscheibe zu schaffen, die von einfacher Bauart ist und deren Torsionsschwingungsdämpfer Reibmittel sowohl für den Lastbetrieb als auch den Leerlaufbetrieb umfaßt.

Die Erfindung geht aus von einer Kupplungsscheibe für eine Kraftfahrzeug-Reibungskupplung, welche folgende Merkmale umfaßt:
Eine zu einer Drehachse konzentrische Nabe mit einem im wesentlichen radial abstehenden Scheibenelement mit einem fest mit der Nabe verbundenen radial inneren Teil und einem mit dem radial inneren Teil fest verbundenen oder über eine Verzahnung mit Drehspiel gekuppelten radial äußeren Teil, zwei auf axial sich gegenüberliegenden Seiten des Scheibenelements angeordnete, fest miteinander verbundene und relativ zum Scheibenelement um die Drehachse drehbare Seitenscheiben, von denen eine einen Reibbelagträger bildet,
mehrere in Fenstern eines radial äußeren Teils des Scheibenelements einerseits und der beiden Seitenscheiben andererseits gehaltene, für den Lastbetrieb bemessene erste Dämpferfedern, die die Seitenscheiben drehelastisch mit dem äußeren Teil des Scheibenelements kuppeln, zwei auf axial sich gegenüberliegenden Seiten des Scheibenelements, jedoch zwischen den Seitenscheiben angeordnete, relativ zur Nabe und zu dem Scheibenelement drehbare, ringförmige Führungsteile,
mehrere in Fenstern eines fest mit der Nabe verbundenen, radial inneren Teils des Scheibenelements einerseits und in Aussparungen der beiden Führungsteile andererseits angeordnete, für den Leerlaufbetrieb bemessene zweite Dämpferfedern, die den radial inneren Teil des Scheibenelements drehelastisch mit den Führungsteilen kuppeln und zwischen den Seitenscheiben und dem Scheibenelement wirksame, für den Lastbetrieb bemessene erste Reibmittel.

Ausgehend von einer solchen Kupplungsscheibe ist die

Erfindung in einem ersten Aspekt dadurch gekennzeichnet, daß beide Führungsteile als Kunststoff-Formteile ausgebildet sind und zugleich Reibflächen von zweiten, für den Leerlaufbetrieb bemessenen Reibmitteln bilden, über die sie sich an dem radial inneren Teil des Scheibenelements abstützen und daß die Führungsteile die Seitenscheiben an dem radial inneren Teil des Scheibenelements und damit an der Nabe axial fixieren.

In einem weiteren Aspekt ist die Erfindung dadurch gekennzeichnet, daß beide Führungsteile als Kunststoff-Formteile ausgebildet und an je einer zylindrischen, äußeren Führungsfläche der Nabe drehbar geführt sind, sowie über zweite für den Leerlaufbetrieb bemessene Reibmittel an dem inneren Teil des Scheibenelements abgestützt sind und daß die Führungsteile die Seitenscheiben an dem radial inneren Teil des Scheibenelements und der zylindrischen Führungsfläche axial bzw. radial führen.

Eine Kupplungsscheibe dieser Art kommt mit einer geringen Anzahl an Bauteilen aus, wobei die Führungsteile für mehrere Funktionen gleichzeitig ausgenutzt werden. Sie sorgen für die Steuerung der Dämpferfedern des Leerlaufbereichs und führen die Seitenscheiben relativ zur Nabe. Zugleich erzeugen sie zumindest im Leerlaufbetrieb ein dämpfendes Reibmoment. Der radial innere Teil und der radial äußere Teil des von der Nabe abstehenden Scheibenelements können, wie dies bei der Kupplungsscheibe der FR-A-2 503 295 der Fall ist, aus zwei koaxial ineinander angeordneten und über eine Verzahnung mit Drehspiel miteinander gekuppelten Nabenscheibenteilen bestehen; der radial innere und der radial äußere Teil des Scheibenelements können aber auch, analog zur DE-A-32 28 515, einteilig zu einer Nabenscheibe verbunden sein.

In einer bevorzugten Ausgestaltung, bei welcher die Anzahl der für die Kupplungsscheibe benötigten Bauteile besonders klein ist, sind die beiden Führungsteile identisch. Zu besonders einfachen Gestaltungen gelangt man, wenn die Führungsteile als zum Beispiel im Spritzgußverfahren hergestellte Kunststoff-Formteile ausgebildet sind und diese Formteile zugleich Reibflächen zumindest der für den Leerlaufbetrieb bemessenen zweiten Reibmittel bilden. Die Reibflächen der zweiten Reibmittel können durch eine Erhebung der dem Scheibenelement benachbarten axialen Stirnfläche der Führungsteile gebildet sein. Dies hat den Vorteil, daß die Größe und der wirksame Radius des im Leerlaufbetrieb wirksamen Reibflächen bei der Konstruktion der Kupplungsscheibe leichter variiert werden kann.

In einer bevorzugten Ausgestaltung haben die als Kunststoff-Formteil ausgebildeten Führungsteile einen vom Scheibenelement wegweisenden Bund, auf dem die jeweils benachbarte Seitenscheibe radial gelagert ist. Die Führungsteile übernehmen damit zugleich die radiale Lagerung der Seitenscheiben und damit des Reibbelagträgers.

Die für die Kupplung mit den zweiten Dämpferfedern bestimmten Aussparungen der Führungsteile sind zweckmäßigerweise als Taschen ausgebildet, die zur jeweils benachbarten Seitenscheibe hin geschlossen sind. Dies hat den Vorteil, daß die Leerlauffedern einerseits geschützt axial zwischen den Führungsteilen sitzen, und andererseits können die äußeren Flächen der Führungsteile besser zur axialen Abstützung und Reibmomenterzeugung gegenüber den Seitenscheiben ausgenutzt werden.

In einer bevorzugten Ausgestaltung ist axial zwischen einem der Führungsteile und der diesem Führungsteil benachbarten Seitenscheibe eine axial wirkende Feder angeordnet, die sowohl die mit dieser Seitenscheibe fest verbundene andere Seitenscheibe gegen das andere der beiden Führungsteile vorspannt, als auch beide Führungsteile gegen den radial inneren Teil des Scheibenelements vorspannt. Eine solche Konstruktion hat den Vorteil, daß mit einer einzigen axial wirkenden Feder sowohl das im Leerlaufbetrieb wirksame Reibmoment bestimmt, als auch die Seitenscheiben relativ zur Nabe axial fixiert werden können. Je nach Ausgestaltung der für den Lastbetrieb bemessenen Reibmittel kann diese axial wirkende Feder auch für die Erzeugung des Last-Reibmoments ausgenutzt werden.

In einer besonders einfachen Ausgestaltung der Erfindung sind der radial innere Teil und der radial äußere Teil des Scheibenelements durch eine fest mit der Nabe verbundene, einteilige Nabenscheibe gebildet, wobei jedes der Führungsteile mit der ihm benachbarten Seitenscheibe drehfest verbunden ist. In dieser Ausgestaltung ist sichergestellt, daß die Relativbewegung zwischen den Eingangsteilen und Ausgangsteilen der Kupplungsscheibe nur an den Gleitflächen zwischen den Führungsteilen einerseits und der Nabe bzw. der Nabenscheibe andererseits auftritt. Bei Verwendung von Führungsteilen aus Kunststoff ergibt sich eine besonders geringe Grundreibung.

Sollen die Führungsteile zugleich für die Erzeugung des Last-Reibmoments oder zumindest für die Übertragung der Axialkraft der hierfür vorgesehenen Reibmittel ausgenutzt werden, so umfassen die für den Lastbetrieb bemessenen Reibmittel zweckmäßigerweise wenigstens eine axial zwischen einer der Seitenscheiben und dem dazu benachbarten Führungsteil angeordnete, relativ zu den Seitenscheiben drehbare Reib-Steuerscheibe, die zur Erzielung eines Reibmomentsprungs mit axial umgebogenen Lappen in Umfangsrichtung seitlich der Stirnenden wenigstens einer der ersten Dämpferfedern in das dieser ersten Dämpferfeder zugeordnete Fenster der Nabenscheibe eingreift. Auf diese Weise kann mit wenigen Einzelteilen eine mehrstufige Reibcharakteristik erzielt werden, wobei die Reibmittel verdrehwinkelabhängig durch die Lappen einerseits sowie durch die Last-Dämpferfedern andererseits gesteuert wird.

Um den Reibmomentsprung auf einfache Weise zu vergrößern, können auf axial beiden Seiten der Nabenscheibe Reib-Steuerscheiben vorgesehen sein. Die beiden Reib-Steuerscheiben sind zweckmäßigerweise über axial abgewinkelte Lappen miteinander drehfest verbunden. Eine solche Konstruktion kommt mit einer einzigen, vorzugsweise als Wellfeder ausgebildeten, axial wirkenden Feder aus.

Sofern die für die drehfeste Verbindung der beiden Reib-Steuerscheiben vorgesehenen Lappen mit Anschlagschultern versehen sind, über die sich die Reib-Steuerscheiben axial aneinander abstützen können, können für den Lastbetrieb einerseits und den Leerlaufbetrieb andererseits unterschiedliche, axial wirkende Federn vorgesehen werden. Auf diese Weise läßt sich der Reibmomentunterschied zwischen Leerlaufbetrieb und Lastbetrieb weiter vergrößern.

Während bei drehfest mit den Seitenscheiben verbundenen Führungsteilen die Leerlauf-Dämpferfedern auch im Verdrehwinkelbereich der Last-Dämpferfedern wirksam sind, können dadurch, daß die Führungsteile einerseits die Funktion der vorstehend erläuterten Reib-Steuerscheiben übernehmen und andererseits relativ zu den Seitenscheiben drehbar sind, sogenannte überbrückte Leerlaufdämpfer vorgesehen werden. Die sowohl gegenüber dem radial inneren Teil des Scheibenelements als auch gegenüber den Seitenscheiben verdrehbaren Führungsteile weisen wenigstens ein Paar radial nach außen abstehender Steuernasen auf, die jeweils paarweise eine der ersten Dämpferfedern zwischen sich einschließen, wobei diese ersten Dämpferfedern ohne Spiel in Umfangsrichtung in den Fenstern der Seitenscheiben und zwischen dem Nasenpaar angeordnet sind, während ein dem Drehwinkel des Leerlaufbetriebsbereichs entsprechendes Spiel in Umfangsrichtung in dem Fenster des Scheibenelements vorgesehen ist. Die in Umfangsrichtung vergrößerten Fenster der Last-Dämpferfedern in den Seitenscheiben bewirken ein Drehspiel im Drehmomentübertragungsweg der Last-Dämpferfedern, innerhalb welchem ausschließlich das durch den Anlagekontakt zwischen den Führungsteilen und den Seitenscheiben erzeugte, für den Lastbetrieb bemessene Reibmoment die Führungsteile bei der Relativdrehung zwischen Seitenscheiben und Nabe mitnimmt. Nach Ausgleich dieses Drehspiels sorgt die Kraft der Leerlauf-Dämpferfedern oder gegebenenfalls zusätzliche Anschläge für eine Überbrückung des Leerlaufdämpfers. Bei dieser Art überbrücktem Leerlaufdämpfer kann der radial innere Teil und der radial äußere Teil des Scheibenelements wiederum eine einteilige, fest mit der Nabe verbundene Nabenscheibe sein.

Die Führungsteile sind bei der vorstehend erläuterten Ausgestaltung zweckmaßigerweise als kunststoffumspritzter Blechkörper ausgebildet, wobei der Blechkörper sowohl mit den Stirnenden der Last-Dämpferfedern als auch den Leerlauf-Dämpferfedern zusammenwirkt. Auf diese Weise können die Führungseigenschaften der Führungsteile verbessert werden, und es ergibt sich ein besseres Verschleißverhalten an den Berührungsstellen der Federn. Der Blechkörper wird zweckmäßigerweise zur Bildung einer Reibfläche für die Last-Reibmittel ausgenutzt.

Im folgenden werden Ausführungsbeispiele der Erfindung anhand einer Zeichnung näher erläutert. Es zeigt:
- Fig. 1: einen Axiallängsschnitt durch eine erfindungsgemäße Kupplungsscheibe für eine Kraftfahrzeug-Reibungskupplung;
- Fig. 2: eine teilweise Schnittansicht der Kupplungsscheibe, gesehen entlang einer Linie II-II aus Fig. 1;
- Fig. 3a, 3b und 3c: eine teilweise Vorderansicht, eine Schnittansicht und eine teilweise Rückansicht eines Führungsteils der Kupplungsscheibe;
- Fig. 4: einen Axiallängsschnitt durch eine Variante der Kupplungsscheibe;
- Fig. 5: einen Axiallängsschnitt durch eine weitere Variante der Kupplungsscheibe;
- Fig. 6a und b: eine teilweise Vorderansicht sowie eine Schnittansicht eines Führungsteils der Kupplungsscheibe nach Fig. 5;
- Fig. 7a: eine Seitenansicht einer Reib-Steuerscheibe der Kupplungsscheibe aus Fig. 5;
- Fig. 7b: eine Schnittansicht der Reib-Steuerscheibe, gesehen entlang einer Linie VII-VII aus Fig. 7a;
- Fig. 7c: eine Detailansicht der Reib-Steuerscheibe, gesehen in Richtung eines Pfeils A in Fig. 7a;
- Fig. 8: einen Axiallängsschnitt durch eine weitere Variante der Kupplungsscheibe und
- Fig. 9: eine teilweise Schnittansicht der Kupplungsscheibe, gesehen entlang einer Linie IX-IX in Fig. 8.

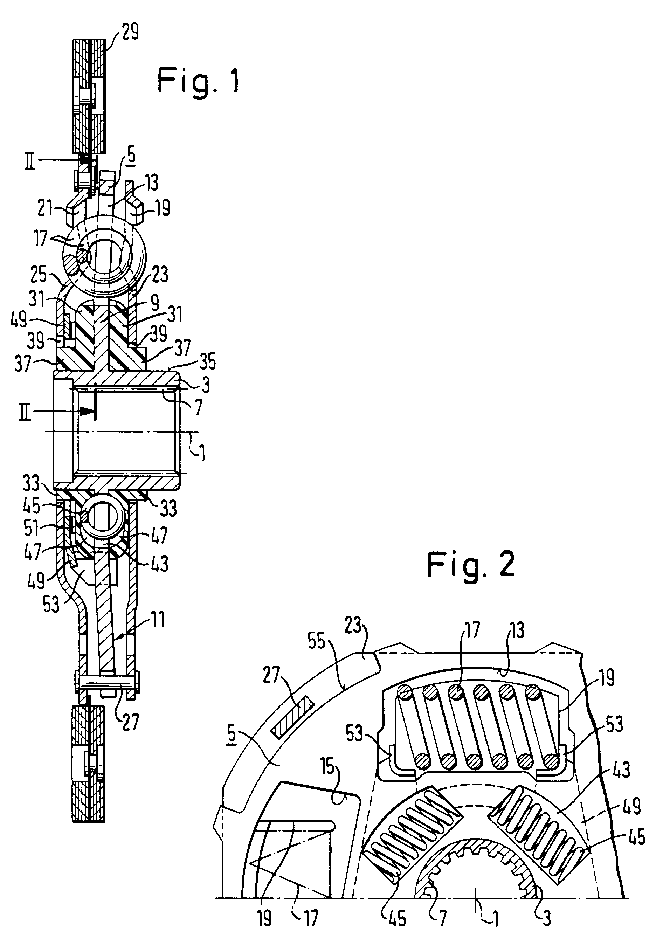

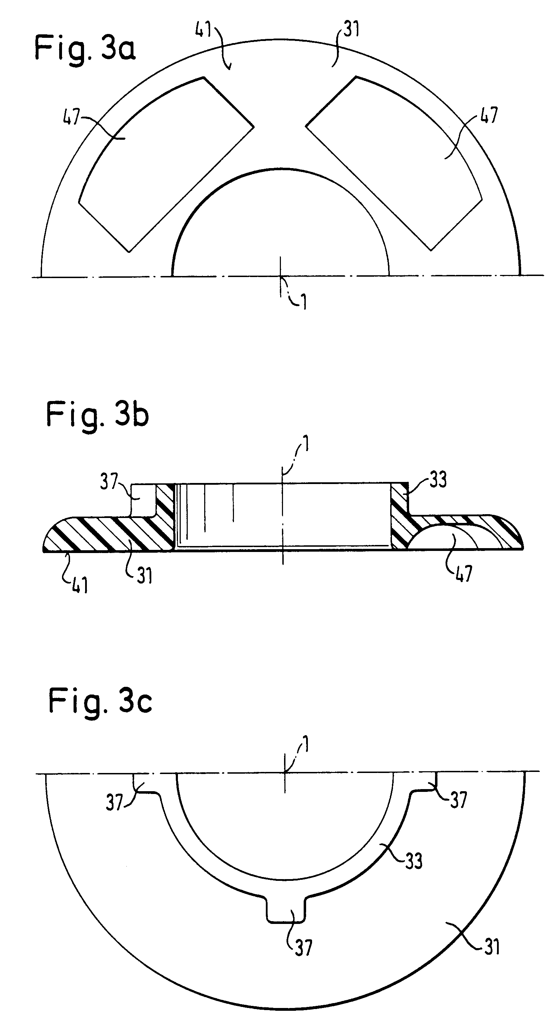

Die in Fig. 1 insgesamt und in den Fig. 2 und 3 mit Einzelheiten dargestellte Kupplungsscheibe umfaßt eine zu einer Drehachse 1 rotationssymmetrische Nabe 3, von der eine fest angebrachte Nabenscheibe 5 sich nach radial außen erstreckt. Die Nabe 3 hat eine Innenverzahnung 7 zum drehfesten Aufsetzen auf eine nicht näher dargestellte Getriebe-Eingangswelle. Die Nabenscheibe 5 weist einen radial inneren scheibenförmigen Teil 9 und einen einstückig daran anschließenden radial äußeren scheibenförmigen Teil 11 auf. In dem radial äußeren Teil 11 sind in Fenstern 13, 15 Schraubendruckfedern 17 angeordnet, die in axial fluchtende Fenster 19, 21 von zwei Scheibenteilen 23, 25 eingreifen, welche axial beiderseits der Nabenscheibe 5 relativ zu dieser drehbar angeordnet sind. Die Scheibenteile 23, 25 sind durch Verbindungsnieten 27 drehfest miteinander verbunden und auf axialem Abstand gehalten. Die Seitenscheibe 25 bildet einen Reibbelagträger und ist mit Kupplungsreibbelägen 29 versehen. Die Federn 17 kuppeln die Seitenscheiben 23, 25 drehelastisch mit der Nabenscheibe 5 und damit der Nabe 3.

Axial zwischen den Seitenscheiben 23, 25 sind als Kunststoff-Formteile ausgebildete, identische Führungsteile 31 angeordnet. Die Führungsteile 31 haben Ringform und sitzen mit einem von der Nabenscheibe 5 axial zur benachbarten Seitenscheibe 23 bzw. 25 abstehenden Ringbund 33 drehbar auf je einer zylindrischen äußeren Führungsfläche 35 der Nabe 3. Die Seitenscheiben 23, 25 sind jeweils an dem Bund 33 des benachbarten Führungsteils 31 radial geführt und über radial von dem Bund 33 abstehende Nasen 37, welche in Aussparungen 39 der Seitenscheiben 23, 25 eingreifen, ohne Spiel in Umfangsrichtung drehfest mit dem Führungsteil 31 verbunden.

Die Führungsteile 31 erstrecken sich radial in dem Bereich zwischen der Nabe 3 und den Federn 17 bis nahe an die Federn 17 heran. Sie liegen mit einer achsnormalen Stirnfläche 41 (Fig. 3b) an der Nabenscheibe 5 in deren radial innerem Teil 9 an. Axial zwischen den Führungsteilen 31 weist die Nabenscheibe 5 Fenster 43 auf, in welchen Schraubenfedern 45 eines für den Leerlaufbetrieb bemessenen Drehschwingungsdämpfers eingreifen. Die Federn 45 greifen in Taschen 47 der Führungsteile 31 ein und kuppeln die drehfest mit den Seitenscheiben 23, 25 verbundenen Führungsteile 31 drehelastisch mit der Nabenscheibe 5 und damit der Nabe 3. Die Taschen 47 sind zu den Seitenscheiben 23, 25 hin geschlossen, so daß die Federn 45 geschützt untergebracht sind. Die Federn 45 sind schwächer bemessen als die Federn 17 des Last-Schwingungsdämpfers.

Zwischen einer der Seitenscheiben, hier der als Reibbelagträger dienenden Seitenscheibe 25 und dem axial benachbarten Führungsteil 31, ist eine als Blechformteil ausgebildete, ringförmige Steuerscheibe 49 angeordnet, die von einer zwischen der Steuerscheibe 49 und dem axial benachbarten Führungsteil 31 angeordneten, axial wirkenden Feder, beispielsweise einer Wellfeder 51 in Reibkontakt mit der Seitenscheibe 25 gespannt wird. Die Wellfeder 51 stützt sich hierbei über die Führungsteile 31 und die dazwischen angeordnete Nabenscheibe 5 an der gegenüberliegenden Seitenscheibe 23 ab. Die Seitenscheibe 23 liegt hierbei unmittelbar an dem Führungsteil 31 an. Von der Steuerscheibe 49 stehen zumindest im Bereich einer der Federn 17 zwei Lappen 53 ab, die im Ruhezustand des Schwingungsdämpfers an den Stirnenden dieser Feder 17 anliegen. Die Lappen 53 erstrecken sich darüber hinaus in das Fenster 13 der Nabenscheibe 5 hinein, wozu dieses Fenster 13 in Umfangsrichtung um die Materialstärke der Lappen 53 vergrößert ist.

Während sämtliche Fenster 19, 21 in den Seitenscheiben 23, 25 so bemessen sind, daß sie die Federn 17 im wesentlichen spielfrei oder mit geringer Vorspannung zwischen deren Stirnenden halten, sind die Fenster 13, 15 in der Nabenscheibe 5 in Umfangsrichtung unterschiedlich lang ausgeführt. Zumindest das Fenster 13 derjenigen Feder 17, die mit der Steuerscheibe 49 zusammenwirkt, ist in Umfangsrichtung um einen Betrag großer, der dem Leerlauf-Wirkungsbereich der Federn 45 entspricht. Die übrigen Fenster der Nabenscheibe 5, zum Beispiel das Fenster 15, sind in Umfangsrichtung noch größer, so daß die darin angeordneten Federn 17 nach einem noch größeren Verdrehwinkel zum Einsatz kommen und so eine mehrfach geknickte Federungskennlinie der Kupplungsscheibe erzielt wird. Der maximale Verdrehbereich wird durch die Verbindungsnieten 27 begrenzt, die, wie Fig. 2 zeigt, in radial offene Aussparungen 55 der Nabenscheibe 5 eingreifen.

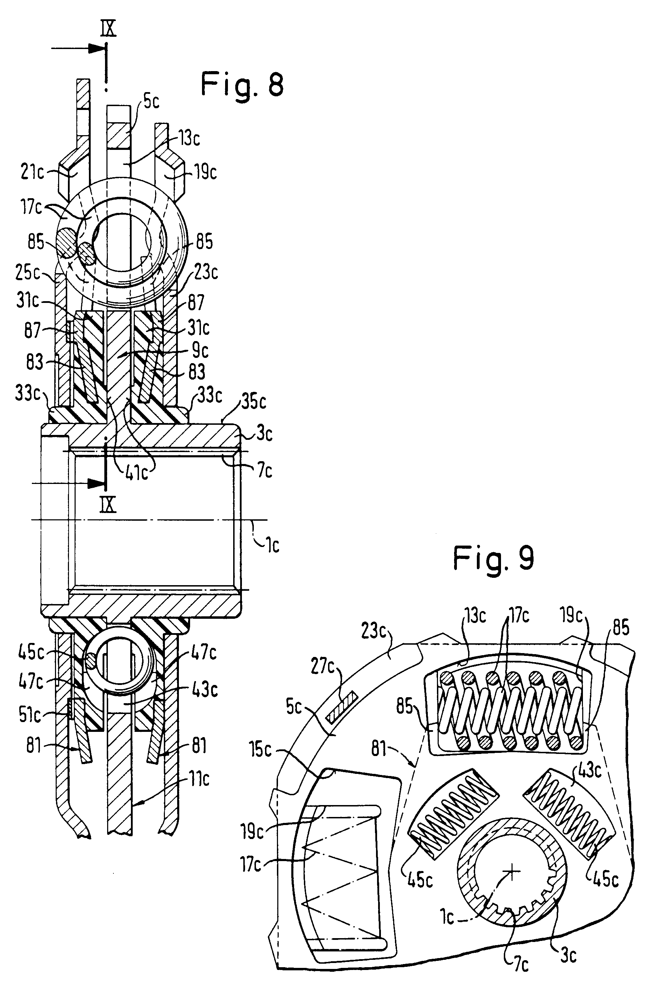

Der Torsionsschwingungsdämpfer der Kupplungsscheibe arbeitet wie folgt: Bei Drehmomentbeaufschlagung der Seitenscheiben 23, 25 über die Reibbeläge 29 verdrehen sich die Seitenscheiben 23 um die Drehachse 1 relativ zur Nabe 3. Die drehfeste Verbindung zwischen den Führungsteilen 31 und den Seitenscheiben 23, 25 stellt sicher, daß die Führungsteile 31 über den gesamten Verdrehwinkel mitgenommen und die Federn 45 komprimiert werden, so daß sie nach Durchlaufen des Leerlauf-Winkelbereichs auch im Last-Winkelbereich parallel zu den Federn 17 wirksam sind. Innerhalb des Leerlaufbereichs, d.h. so lange die Stirnenden der Federn 17 nicht an den in Umfangsrichtung gelegenen Steuerkanten der Fenster 13 anschlagen, bewegt sich die Steuerscheibe 49 zusammen mit der sie steuernden Feder 17 und den Seitenscheiben 23, 25. Hierbei wird lediglich zwischen den beiden Führungsteilen 31 und der Nabenscheibe 5 ein Reibmoment erzeugt, dessen Größe durch die Kraft der die Führungsteile 31 gegen die Nabenscheibe 5 spannenden Feder 51 mit bestimmt wird. Da die Führungsteile 13 aus Kunststoff bestehen, ist das Reibmoment relativ niedrig. Zudem kann auf das Reibmoment noch Einfluß genommen werden, indem beispielsweise gemäß Fig. 8 nicht die gesamte Fläche der Führungsteile an der Nabenscheibe anliegt, sondern nur ein begrenzter Bereich. Nach Überschreiten des Leerlaufbereichs kommt die Stirnseite der Feder 17 sowie gleichzeitig der an dieser Stirnseite anliegende Lappen 53 der Steuerscheibe 49 an der in Umfangsrichtung benachbarten Steuerkante des Fensters 13 zur Anlage. Damit wird nach Übergang in den Lastbereich die Steuerscheibe 49 von der Nabenscheibe 5 festgehalten. Die Seitenscheiben 23, 25 und die beiden Führungsteile 31 werden bei wachsender Belastung weiterhin relativ zur Nabe verdreht und beaufschlagen nacheinander die übrigen Federn 17 wie auch nach wie vor die Federn 45.

Während im Leerlauf-Verdrehbereich ausschließlich die Reibung zwischen der Nabenscheibe 5 und den an ihr anliegenden Führungsteilen 31 wirksam ist, erhöht die durch die Nabenscheibe 5 festgehaltene Steuerscheibe 49 im Lastbereich das Reibmoment. Dieses setzt sich dann aus der Reibung zwischen den Führungsteilen 31 und der Nabenscheibe 5 sowie aus der Reibung zwischen der Steuerscheibe 49 und der Seitenscheibe 25 bzw. der Feder 51 und dem an der Feder 51 anliegenden Führungsteil 31 zusammen. Da die Steuerscheibe 49 aus Metall und das Führungsteil 31 aus Kunststoff besteht, wird die Feder 51 durch Reibkraft drehfest an der Steuerscheibe 49 gehalten und wird gegenüber dem Führungsteil 31 gleiten.

Bei abnehmender Drehmomentbeaufschlagung und somit gegenüber der Nabenscheibe 5 zurückdrehenden Seitenscheiben 23, 25 wird die Steuerscheibe 49 durch die Vorspannung der ihr zugeordneten Schraubenfeder 17 so lange in einer drehfesten Position relativ zur Nabenscheibe 5 gehalten, bis die Schraubenfeder 17 wieder im wesentlichen entspannt in den Fenstern 19, 21 der Seitenscheiben 23, 25 liegt, um dann bei Drehmomentumkehr von der zuvor beaufschlagten Steuerkante des Fensters 13 der Nabenscheibe 5 abzuheben. Das Funktionsprinzip ist für beide Drehrichtungen gleich, allerdings können für den Leerlauf-Verdrehbereich ausgehend von einer Ruhestellung unterschiedlich große Winkel vorgesehen sein, wie dies beispielsweise in Fig. 2 zu erkennen ist.

Im folgenden werden Varianten der anhand der Fig. 1 bis 3 erläuterten Kupplungsscheibe beschrieben. Gleichwirkende Komponenten sind mit den Bezugszahlen der Fig. 1 bis 3 bezeichnet und zur Unterscheidung mit einem Buchstaben versehen. Zur Beschreibung des Aufbaus und der Wirkungsweise wird auf die Beschreibung der Fig. 1 bis 3 Bezug genommen.

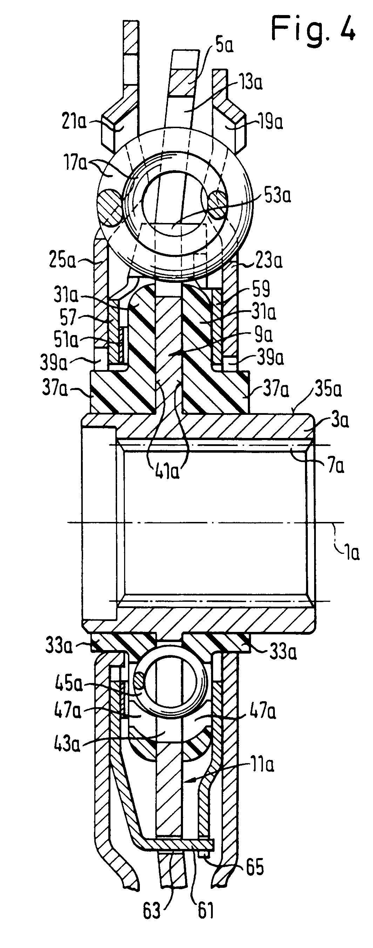

Fig. 4 zeigt eine Kupplungsscheibe, die sich vor der Kupplungsscheibe der Fig. 1 in erster Linie dadurch unterscheidet, daß beiderseits der Nabenscheibe 5a jeweils axial zwischen einem der Führungsteile 31a und der benachbarten Seitenscheibe 23a bzw. 25a Steuerscheiben 57, 59 angeordnet sind. Die Komponenten 15, 27, 29 aus Fig. 1 sind nicht dargestellt, jedoch vorhanden.

Die Steuerscheiben 57, 59 entsprechen der Steuerscheibe 49 und liegen in Reibkontakt an den Seitenscheiben 23a, 25a an. Von der Steuerscheibe 57 stehen Lappen 61 axial ab, die die Nabenscheibe 5a in Schlitzen 63 durchdringen und in Aussparungen 65 der Steuerscheibe 59 eingreifen.

Die Lappen 61 kuppeln die beiden Steuerscheiben 57, 59 in Umfangsrichtung spielfrei drehfest miteinander. Die Reibkraft im Leerlaufbereich und im Lastbereich wird wiederum durch die gemeinsame axial wirkende Feder 51a bestimmt. Die mit den Stirnenden der Federn 17a zusammenwirkenden Paare von Lappen 53a können an einem oder auch an beiden Steuerscheiben 57, 59 vorgesehen sein. Durch die Verwendung von zwei Steuerscheiben 57, 59 läßt sich der Reibmomentunterschied zwischen Leerlaufbereich und Lastbereich vergrößern. Auch bei der Kupplungsscheibe der Fig. 4 ist nur eine einzige Feder 51a nötig. Das Reibmoment baut sich im Leerlaufbereich analog zur Kupplungsscheibe der Fig. 1 durch Relativbewegung zwischen den beiden Führungsteilen 31a und der Nabenscheibe 5a aufgrund der axialen Belastung durch die Feder 51a auf. Im Lastbereich kommt zu dieser Grundreibung zwischen den Führungsteilen 31a und der Nabenscheibe 5a noch die Lastreibung hinzu, d.h. die Reibung zwischen der Steuerscheibe 57 und der den Belagträger bildenden Seitenscheibe 25a bzw. der Feder 51a und dem dazu benachbarten Führungsteil 31a sowie zwischen der Steuerscheibe 59 und der Seitenscheibe 23a einerseits bzw. dem hier benachbarten Führungsteil 31a andererseits. Die Ansteuerung der Federn 17a und 45a entspricht den Verhältnissen der Kupplungsscheibe der Fig. 1.

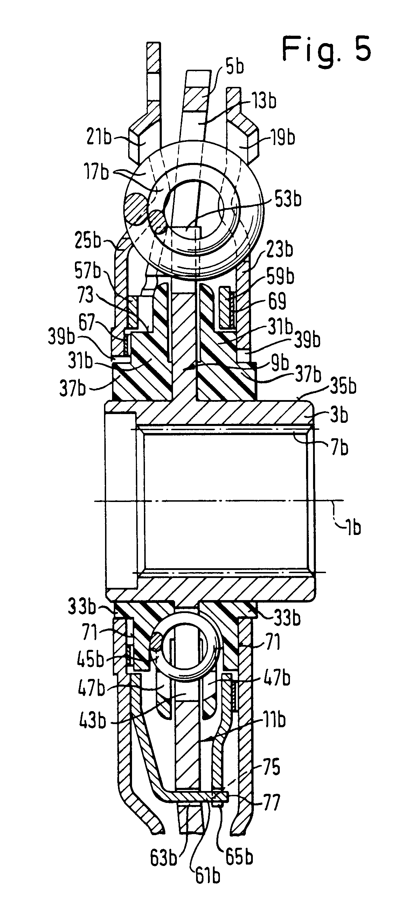

Fig. 5 zeigt eine Variante der Kupplungsscheibe nach Fig. 1, die analog der Kupplungsscheibe aus Fig. 4 zwei Steuerscheiben 57b, 59b umfaßt. Die Steuerscheiben 57b, 59b einerseits und die Führungsteile 31b andererseits werden jedoch im Unterschied zu der Kupplungsscheibe der Fig. 4 durch gesonderte axial wirkende Federn 67, 69 axial vorgespannt. Zur Führung der Steuerscheiben 57b, 59b sowie der Federn 67 und 69 haben die Führungsteile 31b anschließend an den Außendurchmesser der Nasen 37b eine radial verlaufende Fläche 71, die entsprechend der Einbausituation der Kupplungsscheibe entweder als Reibfläche für die Seitenscheibe 23b dient bzw. als Anlagefläche für die axial zwischen der Seitenscheibe 25b und dem gegenüberliegenden Führungsteil 31b eingespannte, axial wirkende Feder 67. An den Außenumfang der Fläche 71 schließt sich ein Absatz 73 an, auf dem der ringförmige Grundkörper der Steuerscheibe 57b bzw. 59b radial geführt ist. Die für die Erzeugung der Reibkraft für den Lastbetrieb vorgesehene axial wirkende Feder 69 ist zwischen einer der Steuerscheiben, hier der Steuerscheibe 59b und der benachbarten Seitenscheibe 23b angeordnet. Die Steuerscheibe 59b stützt sich an Schultern 75 der axial abgebogenen Lappen 61b ab, die von der Steuerscheibe 57b durch Öffnungen 63b der Nabenscheibe 5b hindurchragen. Zur drehfesten Verbindung sind die Enden der Lappen zwischen den Anschlägen 75 mit Nasen 77 versehen, die in die Öffnungen 65b der Steuerscheibe 59b eingreifen. Auf diese Weise kann die Kraft der Feder 69 auf die Steuerscheibe 57b übertragen werden, welche sich mit ihrem Grundkörper an der Innenseite der Seitenscheibe 25b abstützt.

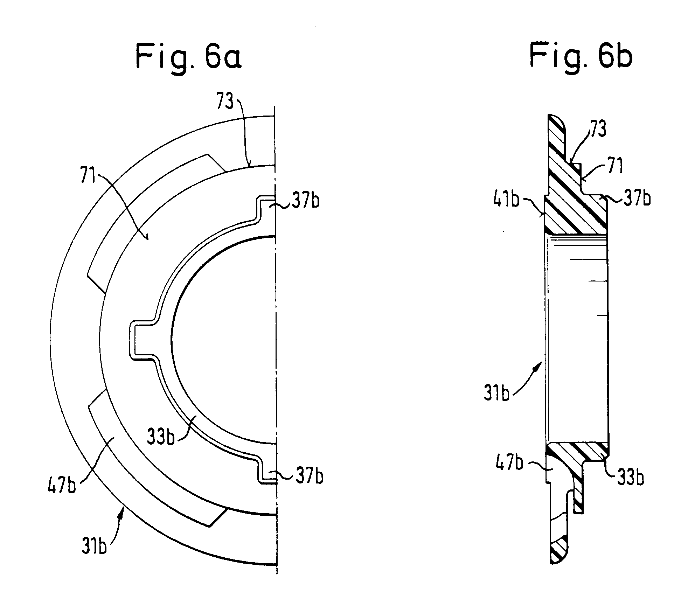

Das Leerlauf-Reibmoment ergibt sich aus der Kraft der Feder 67 einerseits und der Reibung zwischen den Führungsteilen 31b und der Nabenscheibe 5b andererseits. Fig. 5 läßt erkennen, wie das Reibmoment unabhängig von einer Veränderung der Feder 67 beeinflußt werden kann. Der mit der Nabenscheibe 5b zusammenwirkende Reibflächenbereich der Führungsteile 31b ist so geformt, daß nur im radial inneren Bereich eine direkte Berührung stattfindet und somit der wirksame Reibradius klein gehalten wird. Beim Überschreiten des Leerlaufbereichs schlagen die Lappen 53b der Steuerscheiben 57b, 59b an der Kante des für die Last-Federn 17b vorgesehenen Fensters 13b der Nabenscheibe 5b an, wie dies im Vorstehenden bereits erläutert wurde. Mit dem Anschlagen werden beide Steuerscheiben 57b, 59b relativ zur Nabenscheibe 5b festgehalten, so daß sich nun die Steuerscheiben 57b, 59b relativ zu den Seitenscheiben 23b, 25b drehen. Die hierbei erzeugte Reibkraft ist abhängig von der Werkstoffpaarung Metall auf Metall dieser Scheiben sowie der Kraft der Feder 69. Im Lastbereich wird das Reibmoment also durch die bereits im Leerlaufbereich wirksame Reibung und zusätzlich durch die Reibung der beiden Steuerscheiben 57b, 59b bestimmt. Die Konstruktion gemäß den Fig. 5 bis 7 erlaubt es, die Reibmomente für den Leerlaufbereich und für den Lastbereich vollständig unabhängig voneinander einzustellen.

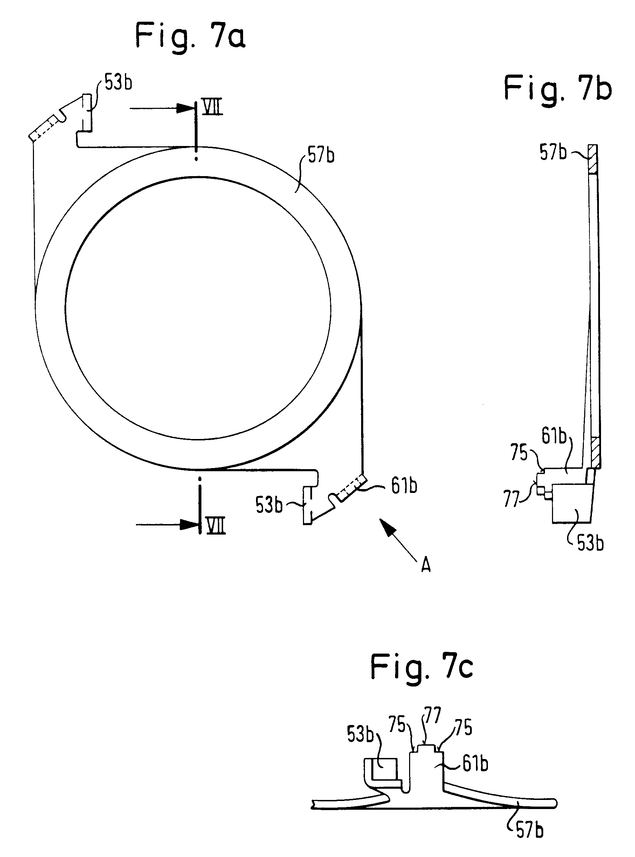

Die Kupplungsscheibe der Fig. 5 bis 7 unterscheiden sich von den zuvor erläuterten Kupplungsscheiben ferner durch die Art der Anordnung der Lappen 53b, die lediglich an der Steuerscheibe 57b vorgesehen sind, während die Steuerscheibe 59b mittels der Lappen 61b von der Steuerscheibe 57b mitgenommen wird. Wie am besten Fig. 7a zeigt, sind zwei Lappen 53b vorgesehen, die mit zwei der Federn 17b lediglich in ein und derselben Drehrichtung zusammenwirken. Die Lappen 53b liegen am wirkungsmäßig gleichen Stirnende der beiden Federn 17b an und diese Federn 17b sind wiederum in untereinander gleichen Fenstern 13b der Nabenscheibe 5b einerseits sowie untereinander gleichen Fenstern 19b, 21b der Seitenscheiben 23b, 25b andererseits angeordnet. Der Reibkrafteinsatz im Lastbereich ist damit nur in einer Drehrichtung wirksam, beispielsweise bei Schubbeanspruchung, während er in der anderen Drehrichtung aufgrund der fehlenden Lappen unterbleibt. Wird analog zu Fig. 2 angenommen, daß die Lappen 53b aus Fig. 7 nur entgegen dem Uhrzeigerdrehsinn wirksamen Lappen 53b vorhanden sind, so wird bei Drehmomentbeaufschlagung der Seitenscheibe 23 aus Fig. 2 entgegengesetzt dem Uhrzeigerdrehsinn und bei festgehaltener Nabe 3 die zusätzliche Reibung für den Lastbereich dann einsetzen, wenn die Federn 17 an den Steuerkanten der Fenster 13 der Nabenscheibe 5 anliegen, die entgegengesetzt dem Uhrzeigersinn angeordnet sind. Bei abnehmendem Drehmoment bleibt das zusätzliche Reibmoment der beiden Steuerscheiben 57b, 59b so lange erhalten, bis die Federn 17b von den Anschlagkanten der Fenster 13b abheben. Von diesem Moment an werden die Steuerscheiben 57b, 59b reibschlüssig von den Seitenscheiben 23b, 25b mitgenommen und leisten somit keinen Beitrag zur Reibkrafterzeugung. Es versteht sich, daß in Abwandlung der Konstruktion der Fig. 5 auch für beide Drehrichtungen Lappen 53b vorgesehen sein können; insbesondere können die Steuerlappen 53b für einander entgegengesetzte Drehrichtungen an verschiedenen Steuerscheiben 57b bzw. 59b angeordnet werden.

Die Fig. 8 und 9 zeigen eine weitere Variante einer Kupplungsscheibe, die sich von den vorstehend erläuterten Kupplungsscheiben im wesentlichen dadurch unterscheidet, daß die Führungsteile 31c jeweils mit Steuerscheiben 81, die in ihrer Funktion den bisher erläuterten Steuerscheiben entsprechen, zu einer Baueinheit vereinigt sind und diese Baueinheit sowohl relativ zur Nabenscheibe 5c als auch zu den Seitenscheiben 23c, 25c drehbar ist. Die Steuerscheiben 81 sind wiederum zweckmäßigerweise als Metall-Formkörper ausgebildet, während es sich bei den Führungsteilen 31c vorzugsweise um Kunststoff-Formkörper handelt, die insbesondere an den Steuerscheiben 81 angespritzt sind.

Auch bei der Kupplungsscheibe nach Fig. 8 und 9 sind die beiden Führungsteile 31c über axial abstehende Bunde 33c auf dem Außenmantel 35c der Nabe 3c drehbar gelagert. Auf diesen Bunden 33c stützen sich die Seitenscheiben 23c bzw. 25c radial ab. Die Führungsteile 31c sind durch eine Feder 51c, die zwischen einer der aus Steuerscheibe 81 und Führungsteil 31c bestehenden Baueinheiten und der benachbarten Seitenscheibe, hier der Seitenscheibe 25c, angeordnet ist, axial verspannt. Im vorliegenden Fall ist die Feder zwischen der Seitenscheibe 25c und einem freiliegenden Bereich der Steuerscheibe 81 eingespannt. Die Steuerscheiben 81 haben einen ringförmigen Grundkörper 83, der vom Material der Führungsteile 31c ummantelt ist und erstrecken sich nach radial außen hin über das Kunststoffmaterial hinaus in Form von Nasen 85, die entsprechend in vorstehend erläuterten Lappen 53 paarweise mit zumindest einer der Federn 17c des Lastdämpfers zusammenwirken. Die Nasen 85 liegen in Umfangsrichtung ohne Spiel an den Stirnenden der Feder 17c an, wenn sich diese in ihrer Ruhestellung befindet, wobei auch hier die Feder 17c in den Fenstern 19c, 21c der Seitenscheiben 23c, 25c mit geringer Vorspannung gehalten ist. Die Führungsteile 31c sind wiederum mit Taschen 47c für die Aufnahme von Federn 45c des Leerlaufdämpfers versehen. Die Federn 45c sitzen im übrigen in Fenstern 43c der Nabenscheibe 5c. Die Grundkörper 83 der Steuerscheiben 81 sind so ausgebildet, daß sie in ihrem radial inneren Bereich Anschlagkanten für die Federn 45c bilden, die mit den durch die Taschen 47c gebildeten Steuerkanten fluchten und so die Steuerkanten des Kunststoffmaterials verstärken. Die Grundkörper 83 bilden darüber hinaus in ihrem mittleren Bereich Reibflächen für die Anlage an der Seitenscheibe 23c einerseits bzw. der Feder 51c andererseits. Um dies zu ermöglichen sind die Grundkörper 83 von außen her gesehen leicht gewölbt ausgebildet, so daß sie mit ihrem mittleren Bereich über die Außenkontur der Führungsteile 31c vorstehen und radial innen zur Bildung der Steuerkanten für die Federn 45c zur Nabenscheibe hin eingezogen sind. Desgleichen sind die Steuerscheiben 81 im Bereich der Nasen 85 zur Nabenscheibe 5c hin eingezogen, um dort auch Innenfedern der Federn 17c zu erfassen. Die für den Reibkontakt vorgesehenen Bereiche der Steuerscheiben 81 haben die Form mehrerer in Umfangsrichtung verteilter Erhebungen 87, die aus dem Blechmaterial herausgedrückt sind und geringfügig über das Kunststoffmaterial der Führungsteile 31c vorstehen. Es versteht sich, daß die Erhebung auch ringförmig geschlossen sein kann.

Bei Drehmomentbeaufschlagung im Leerlaufbetrieb werden lediglich die Federn 45c komprimiert. Der Leerlaufbereich entspricht der Differenz zwischen der Öffnungsweite in Umfangsrichtung der für die Federn 17c vorgesehenen Fenster 19c, 21c in den Seitenscheiben 23c, 25c einerseits und der Öffnungsweite in Umfangsrichtung der Fenster 13c in der Nabenscheibe 5c. Es versteht sich, daß sämtliche Fenster der Nabenscheibe 5c, die zur Aufnahme von Federn 17c des Lastdämpfers vorgesehen sind, zumindest für diese Differenz bemessen sein müssen. Zusätzlich sind jedoch auch Fenster 15c vorgesehen, die in Umfangsrichtung größer als die Fenster 13c sind, so daß die dort angeordneten Federn 17c erst nach Durchlaufen eines größeren Verdrehwinkels zum Einsatz kommen. Nach Durchlaufen des Leerlaufbereichs und zunehmender Kompression der Federn 17c in den Fenstern 13c kommen die Führungsteile 31c relativ zur Nabenscheibe 5c zum Stillstand, wenn die zwischen den Führungsteilen 31c bzw. den Steuerscheiben 81 einerseits und den Seitenscheiben 23c, 25c aufgebaute Reibkraft die Vorspannkraft der Federn 45c unterschreitet. Von diesem Moment an wirkt im Lastbereich lediglich die Reibkraft zwischen den Erhebungen 87 und der Seitenscheibe 23c bzw. der Feder 51c. Die Führungsteile 31c bleiben dann relativ zur Nabenscheibe 5c stehen. Bei abnehmender Drehmomentbeaufschlagung und anschließender Drehrichtungsumkehr ergibt sich eine analoge Funktionsweise.

Im Leerlaufbereich wird das Reibmoment durch die Reibung zwischen dem Kunststoffmaterial der beiden Führungsteile 31c und der Nabenscheibe 5c sowie durch die Kraft wiederum der Feder 51c bestimmt. Für die Kopplung der Führungsteile 31c mit den Seitenscheiben 23c, 25c sorgt die höhere Reibung der Erhebungen 87 an der Seitenscheibe 23c bzw. an der Feder 51c.

Um den Reibeinsatz für den Lastbereich unabhängig vom Kompressionszustand der Leerlauffedern 45c zu ermöglichen, können selbstverständlich die Nasen 85 entsprechend Fig. 2 mit axial abgewinkelten Bereichen versehen werden, die in die Fenster 13c der Nabenscheibe 5c eingreifen.

Nachdem bei der Kupplungsscheibe der Fig. 8 und 9 die Führungsteile 31c nicht durch Formschluß drehfest mit den Seitenscheiben 23c, 25c verbunden sind, baut sich die Reibkraft nach Art eines überbrückten Leerlaufdämpfers auf, d.h. im Leerlaufbereich ist lediglich die Reibung zwischen dem Kunststoffmaterial der Führungsteile 31c und der Nabenscheibe 5c wirksam, während im Lastbereich lediglich die Reibung zwischen den Steuerscheiben 81 und der Seitenscheibe 23c bzw. der Feder 51c wirksam ist.

Bei sämtlichen vorstehend erläuterten Kupplungsscheiben werden die Seitenscheiben mittels der Führungsteile gegenüber der Nabe exakt sowohl axial als auch radial geführt. Durch die Verwendung von Kunststoff für die Führungsteile ist eine preiswerte Herstellung möglich, und zudem wird die bei dieser Gleitreibung entstehende Reibkraft auf einen für den Leerlaufbetrieb geeigneten niedrigen Wert gehalten. Die Führungsteile sind jeweils identisch, so daß Herstellung und Lagerhaltung preiswert sind und der Einbau keine Probleme mit sich bringt.

## Patentansprüche

1. Kupplungsscheibe für eine Kraftfahrzeug-Reibungskupplung, umfassend
eine zu einer Drehachse (1) konzentrische Nabe (3) mit einem im wesentlichen radial abstehenden Scheibenelement (5)
mit einem fest mit der Nabe (3) verbundenen radial inneren Teil (9) und einem mit dem radial inneren Teil (9) fest verbundenen oder über eine Verzahnung mit Drehspiel gekuppelten radial äußeren Teil (11),
zwei auf axial sich gegenüberliegenden Seiten des Scheibenelements (5) angeordnete, fest miteinander verbundene und relativ zum Scheibenelement (5) um die Drehachse (1) drehbare Seitenscheiben (23, 25), von denen eine einen Reibbelagträger bildet,
mehrere in Fenstern (13, 19, 21) des radial äußeren Teils (11) des Scheibenelements (5) einerseits und der beiden Seitenscheiben (23, 25) andererseits gehaltene, für den Lastbetrieb bemessene erste Dämpferfedern (17), die die Seitenscheiben (23, 25) drehelastisch mit dem äußeren Teil (11) des Scheibenelements (5) kuppeln,
zwei auf axial sich gegenüberliegenden Seiten des Scheibenelements (5), jedoch zwischen den Seitenscheiben (23, 25) angeordnete, relativ zur Nabe (3) und zu dem Scheibenelement (5) drehbare ringförmige Führungsteile (31),
mehrere in Fenstern (43c) des radial inneren Teils (9) des Scheibenelements (5) einerseits und in Aussparungen (47) der beiden Führungsteile (31) andererseits angeordnete, für den Leerlaufbetrieb bemessene zweite Dämpferfedern (45), die den radial inneren Teil (9) des Scheibenelements (5) drehelastisch mit den Führungsteilen (31) kuppeln und zwischen den Seitenscheiben (23, 25) und dem Scheibenelement (5) wirksame, für den Lastbetrieb bemessene erste Reibmittel (49; 57, 59; 81),
**dadurch gekennzeichnet,** daß
beide Führungsteile (31) als Kunststoff-Formteile ausgebildet sind und zugleich Reibflächen (41) von zweiten, für den Leerlaufbetrieb bemessenen Reibmitteln (41) bilden, über die sie sich an dem radial inneren Teil (9) des Scheibenelements (5) abstützen und daß die Führungsteile (31) die Seitenscheiben (23, 25) an dem radial inneren Teil (9) des Scheibenelements (5) und damit an der Nabe (3) axial fixieren.

2. Kupplungsscheibe für eine Kraftfahrzeug-Reibungskupplung, umfassend
eine zu einer Drehachse (1) konzentrische Nabe (3) mit einem im wesentlichen radial abstehenden Scheibenelement (5)
mit einem fest mit der Nabe (3) verbundenen radial inneren Teil (9) und einem mit dem radial inneren Teil (9) fest verbundenen oder über eine Verzahnung mit Drehspiel gekuppelten radial äußeren Teil (11), zwei auf axial sich gegenüberliegenden Seiten des Scheibenelements (5) angeordnete, fest miteinander verbundene und relativ zum Scheibenelement (5) um die Drehachse (1) drehbare Seitenscheiben (23, 25), von denen eine einen Reibbelagträger bildet, mehrere in Fenstern (13, 19, 21) des radial äußeren Teils (11) des Scheibenelements (5) einerseits und der beiden Seitenscheiben (23, 25) andererseits gehaltene, für den Lastbetrieb bemessene erste Dämpferfedern (17), die die Seitenscheiben (23, 25) drehelastisch mit dem äußeren Teil (11) des Scheibenelements (5) kuppeln,
zwei auf axial sich gegenüberliegenden Seiten des Scheibenelements (5), jedoch zwischen den Seitenscheiben (23, 25) angeordnete, relativ zur Nabe (3) und zu dem Scheibenelement (5) drehbare ringförmige Führungsteile (31),
mehrere in Fenstern (43c) des radial inneren Teils (9) des Scheibenelements (5) einerseits und in Aussparungen (47) der beiden Führungsteile (31) andererseits angeordnete, für den Leerlaufbetrieb bemessene zweite Dämpferfedern (45), die den radial inneren Teil (9) des Scheibenelements (5) drehelastisch mit den Führungsteilen (31) kuppeln und zwischen den Seitenscheiben (23, 25) und dem Scheibenelement (5) wirksame, für den Lastbetrieb bemessene erste Reibmittel (49; 57, 59; 81),
**dadurch gekennzeichnet,**
daß beide Führungsteile (31) als Kunststoff-Formteile ausgebildet und an je einer zylindrischen, äußeren Führungsfläche (35) der Nabe (3) drehbar geführt sind, sowie über zweite für den Leerlaufbetrieb bemessene Reibmittel (41) an dem inneren Teil (9) des Scheibenelements (5) abgestützt sind und daß die Führungsteile (31) die Seitenscheiben (23, 25) an dem radial inneren Teil (9) des Scheibenelements (5) und der zylindrischen Führungsfläche (35) axial bzw. radial führen.

3. Kupplungsscheibe nach Anspruch 2, dadurch gekennzeichnet, daß die als Kunststoff-Formteile ausgebildeten Führungsteile (31) zugleich Reibflächen (41) zumindest der zweiten Reibmittel bilden.

4. Kupplungsscheibe nach Anspruch 3, dadurch gekennzeichnet, daß die Reibflächen (41b; 41c) der zweiten Reibmittel durch eine Erhebung der dem Scheibenelement (5b; 5c) benachbarten axialen Stirnfläche der Führungsteile (31b; 31c) gebildet sind.

5. Kupplungsscheibe nach Anspruch 3 oder 4, dadurch gekennzeichnet, daß jedes der Führungsteile (31) einen vom Scheibenelement wegweisenden Bund (33) hat, auf dem die jeweils benachbarte Seitenscheibe (23, 25) radial gelagert ist.

6. Kupplungsscheibe nach einem der Ansprüche 1 bis 5, dadurch gekennzeichnet, daß die beiden Führungsteile (31) identisch sind.

7. Kupplungsscheibe nach einem der Ansprüche 1 bis 6, dadurch gekennzeichnet, daß die für die Kupplung mit den zweiten Dämpferfedern (45) bestimmten Aussparungen (47) der Führungsteile (31) als Taschen ausgebildet sind, die zur jeweils benachbarten Seitenscheibe (23, 25) hin geschlossen sind.

8. Kupplungsscheibe nach einem der Ansprüche 1 bis 7, dadurch gekennzeichnet, daß axial zwischen einem der Führungsteile (31) und der diesem Führungsteil (31) benachbarten Seitenscheibe (25) eine axial wirkende Feder (51; 51a; 51c; 67) angeordnet ist, die sowohl die mit dieser Seitenscheibe (25) fest verbundene andere Seitenscheibe (23) gegen das andere der beiden Führungsteile (31) vorspannt, als auch beide Führungsteile (31) gegen den radial inneren Teil (9) des Scheibenelements (5) vorspannt.

9. Kupplungsscheibe nach einem der Ansprüche 1 bis 8, dadurch gekennzeichnet, daß der radial innere Teil (9) und der radial äußere Teil (11) des Scheibenelements durch eine fest mit der Nabe verbundene, einteilige Nabenscheibe (5) gebildet sind und daß jedes der Führungsteile (31) mit der ihm benachbarten Seitenscheibe (23, 25) drehfest verbunden ist.

10. Kupplungsscheibe nach Anspruch 9, dadurch gekennzeichnet, daß die für den Lastbetrieb bemessenen ersten Reibmittel wenigstens eine axial zwischen einer der Seitenscheiben (25) und dem dazu benachbarten Führungsteil (31) angeordnete, relativ zur Seitenscheibe (25) drehbare Reib-Steuerscheibe (49; 57, 59) aufweisen, die zur Erzielung eines Reibmomentsprungs mit axial umgebogenen Lappen (53) in Umfangsrichtung seitlich der Stirnenden wenigstens einer der ersten Dämpferfedern (17) in das dieser ersten Dämpferfeder (17) zugeordnete Fenster (13) der Nabenscheibe (5) eingreift.

11. Kupplungsscheibe nach Anspruch 10, dadurch gekennzeichnet, daß auf axial beiden Seiten der Nabenscheibe (5) Reib-Steuerscheiben (57, 59) vorgesehen sind und daß von wenigstens einer (57) der Reib-Steuerscheiben Lappen (63) axial abstehen, die in Öffnungen (65) der anderen Reib-Steuerscheibe (59) eingreifen und die Reib-Steuerscheiben (57, 59) drehfest miteinander verbinden.

12. Kupplungsscheibe nach Anspruch 11, dadurch gekennzeichnet, daß die Reib-Steuerscheiben (57, 59) im Kraftweg einer axial zwischen einer (25a) der Seitenscheiben und dem benachbarten Führungsteil (31a) angeordneten, die Führungsteile (31a) gegen die Nabenscheibe (5a) spannenden, axial wirkenden Feder (51a) liegen.

13. Kupplungsscheibe nach Anspruch 12, dadurch gekennzeichnet, daß jedes der Führungsteile (31a) einen axial abstehenden Bund (33a) aufweist, an dem die benachbarte Seitenscheibe (23a, 25a) radial geführt ist, daß für die drehfeste Verbindung von jedem Bund (33a) Nasen (37a) radial nach außen abstehen, die in Aussparungen (39a) der benachbarten Seitenscheibe (23a, 25a) eingreifen, und daß die axial wirkende Feder (51a) axial zwischen einer (57) der Reib-Steuerscheiben und dem benachbarten Führungsteil (31a) angeordnet ist.

14. Kupplungsscheibe nach Anspruch 11, dadurch gekennzeichnet, daß die Lappen (63b) mit Anschlagschultern (75) versehen sind, über die sich die Reib-Steuerscheiben (57b, 59b) axial aneinander abstützen und daß axial zwischen einem der Führungsteile (31b) und der benachbarten Seitenscheibe (25b) eine erste axial wirkende Feder (67) und axial zwischen einer (59b) der Reib-Steuerscheiben und der benachbarten Seitenscheibe (23b) eine zweite axial wirkende Feder (69) eingespannt ist.

15. Kupplungsscheibe nach Anspruch 14, dadurch gekennzeichnet, daß jedes der Führungsteile (31b) einen axial abstehenden Bund (33b) aufweist, an dem die benachbarte Seitenscheibe (23b, 25b) radial geführt ist, daß für die drehfeste Verbindung von jedem Bund (33b) Nasen (37b) radial nach außen abstehen, die in Aussparungen (39b) der benachbarten Seitenscheibe (23b, 25b) eingreifen, daß sich an die Nasen (37b) eine achsnormal verlaufende Anschlagfläche (71) anschließt und an der auf axial einer Seite der Nabenscheibe (5) die erste axial wirkende Feder (67) und auf der anderen Seite der Nabenscheibe (5) die dortige Seitenscheibe (23b) anliegt und daß sich radial außen an die Anschlagfläche (71) ein Führungsabsatz (73) anschließt, auf welchen die Reib-Steuerscheiben (57b, 59) bzw. die zweite axial wirkende Feder (69) radial geführt sind.

16. Kupplungsscheibe nach einem der Ansprüche 1 bis 8, dadurch gekennzeichnet, daß die Führungsteile (31c) sowohl gegenüber dem radial inneren Teil (9c) des Scheibenelements (5) als auch gegenüber den Seitenscheiben (23c, 25c) verdrehbar sind und wenigstens ein Paar radial nach außen abstehender Nasen (85) aufweist, die jeweils paarweise eine der ersten Dämpferfedern (17c) zwischen sich einschließen, wobei diese ersten Dämpferfedern (17c) ohne Spiel in Umfangsrichtung in den Fenstern (19c, 21c) der Seitenscheiben (23c, 25c) und zwischen dem Nasenpaar (85) angeordnet sind und mit einem dem Drehwinkel des Leerlaufbetriebsbereichs entsprechenden Spiel in Umfangsrichtung in dem Fenster (13c) des Scheibenelements (5c) angeordnet ist.

17. Kupplungsscheibe nach Anspruch 16, dadurch gekennzeichnet, daß die Führungsteile (31c) einen als Kunststoff-Formteil ausgebildeten, am radial inneren Teil (9c) des Scheibenelements (5c) anliegenden Grundkörper aufweisen und daß die Nasen (85) Teil eines an dem Kunststoff-Formteil gehaltenen, aus Metall bestehenden Blechkörpers (83) sind.

18. Kupplungsscheibe nach Anspruch 17, dadurch gekennzeichnet, daß der Blechkörper (83) als ringförmiges Scheibenteil ausgebildet ist, von dem die Nasen (85) nach radial außen abstehen und das zur Bildung einer Reibfläche (87) der ersten Reibmittel in einem radial zwischen den ersten Dämpferfedern (17c) und der Nabe (3c) gelegenen Bereich zur benachbarten Seitenscheibe (23c, 25c) hin über das Kunststoff-Formteil axial vorsteht.

19. Kupplungsscheibe nach Anspruch 18, dadurch gekennzeichnet, daß der Blechkörper (83) radial beiderseits der Reibfläche (87) zum Scheibenelement hin gebogen ist.

20. Kupplungsscheibe nach Anspruch 18 oder 19, dadurch gekennzeichnet, daß die Reibfläche durch mehrere in Umfangsrichtung verteilte, aus dem Blechkörper herausgedrückte Erhebungen (87) gebildet ist.

21. Kupplungsscheibe nach einem der Ansprüche 18 bis 19, dadurch gekennzeichnet, daß die Aussparungen (47c) der Führungsteile (31c) Steuerkanten für die zweiten Federn haben, die durch das Kunststoff-Formteil und den Blechkörper gemeinsam begrenzt sind.

## Claims

1. Clutch disc for a motor vehicle friction clutch, comprising:
a hub (3) concentric to an axis of rotation (1) with a substantially radially protruding disc element (5),
with a radially inner part (9) firmly attached to the hub (3) and a radially outer part (11) firmly attached to the radially inner part (9) or coupled by a tooth system with rotational play,
two side discs (23, 25) arranged on axially opposite sides of the disc element (5), connected together firmly and in relation to the disc element (5) rotatable about the axis of rotation (1), one of which forms a friction lining carrier,
several first damper springs (17) dimensioned for operation under load held in windows (13, 19, 21) of the radially outer part (11) of the disc element (5) on one side and of the two side discs (23, 25) on the other side, said damper springs coupling the side discs (23, 25) rotationally elastically to the outer part (11) of the disc element (5),
two annular guide parts (31) arranged on axially opposite sides of the disc element (5), but between the side discs (23, 25) and rotatable in relation to the hub (3) and to the disc element (5),
several second damper springs (45) dimensioned for operation without load and disposed in windows (43c) of the radially inner part (9) of the disc element (5) on one side and in recesses (47) of the two guide parts (31) on the other side, said damper springs coupling the radially inner part (9) of the disc element (5) rotationally elastically to the guide parts (31), and first friction means (49; 57, 59; 81) effective between the side discs (23, 25) and the disc element (5) and dimensioned for operation under load,
**characterised in that**
both guide parts (31) are formed as plastic moulded parts and also form frictional surfaces (14) of the second friction means (41) dimensioned for operation without load, by means of which they support themselves on the radially inner part (9) of the disc element (5) and in that the guide parts (31) axially fix the side discs (23, 25) to the radially inner part (9) of the disc element (5) and thus to the hub (3).

2. Clutch disc for a motor vehicle friction clutch, comprising:
a hub (3) concentric to an axis of rotation (1) with a substantially radially protruding disc element (5),
with a radially inner part (9) firmly attached to the hub (3) and a radially outer part (11) firmly attached to the radially inner part (9) or coupled by a tooth system with rotational play,
two side discs (23, 25) arranged on axially opposite sides of the disc element (5), connected together firmly and in relation to the disc element (5) rotatable about the axis of rotation (1), one of which forms a friction lining carrier,
several first damper springs (17) dimensioned for operation under load held in windows (13, 19, 21) of the radially outer part (11) of the disc element (5) on one side and of the two side discs (23, 25) on the other side, said damper springs coupling the side discs (23, 25) rotationally elastically to the outer part (11) of the disc element (5),
two annular guide parts (31) arranged on axially opposite sides of the disc element (5), but between the side discs (23, 25) and rotatable in relation to the hub (3) and to the disc element (5),
several second damper springs (45) dimensioned for operation without load and disposed in windows (43c) of the radially inner part (9) of the disc element (5) on one side and in recesses (47) of the two guide parts (31) on the other side, said damper springs coupling the radially inner part (9) of the disc element (5) rotationally elastically to the guide parts (31), and first friction means (49; 57, 59; 81) effective between the side discs (23, 25) and the disc element (5) and dimensioned for operation under load,
**characterised in that**
both guide parts (31) are formed as plastic moulded parts, are each rotatably guided on a cylindrical outer guide surface (35) of the hub (3) and are supported on the inner part (9) of the disc element (5) by second friction means (41) dimensioned for operation without load, and in that the guide parts (31) axially or radially guide the side discs (23, 25) on the radially inner part (9) of the disc element (5) and the cylindrical guide surface (25).

3. Clutch disc according to Claim 2, characterised in that the guide parts (31) formed as plastic moulded parts also form friction surfaces (41) at least of the second friction means.

4. Clutch disc according to Claim 3, characterised in that the friction surfaces (41b; 41c) of the second friction means are formed by an elevation of the axial end of the guide parts (31b, 31c) adjacent to the disc element (5b; 5c).

5. Clutch disc according to Claim 3 or 4, characterised in that each of the guide parts (31) has a collar (33) pointing away from the disc element, on which each adjacent side disc (23, 25) is radially mounted.

6. Clutch disc according to one of Claims 1 to 5, characterised in that both guide parts (31) are identical.

7. Clutch disc according to one of Claims 1 to 6, characterised in that the recesses (47) of the guide parts (31) intended for coupling with the second damper springs (45) are formed as pockets which are closed towards each adjacent side disc (23, 25).

8. Clutch disc according to one of Claims 1 to 7, characterised in that an axially acting spring (51; 51a; 51c; 67) is disposed axially between one of the guide parts (31) and the side disc (25) adjacent to said guide part (31), said spring both loading the other side disc (23) firmly attached to this side disc (25) against the other of the two guide parts (31) and loading both guide parts (31) against the radially inner part (9) of the disc element (5).

9. Clutch disc according to one of Claims 1 to 8, characterised in that the radially inner part (9) and the radially outer part (11) of the disc element are formed by a one-piece hub disc (5) firmly connected to the hub, and in that each of the guide parts (31) is non-rotatably connected to the side disc (23, 25) adjacent thereto.

10. Clutch disc according to Claim 9, characterised in that the first friction means dimensioned for operation under load comprise at least one friction control disc (49; 57, 59) arranged axially between one of the side discs (25) and the guide part (31) adjacent thereto and rotatable in relation to the side disc (25), the control disc engaging in the window (13) allocated to this first damper spring (17) of the hub disc (5) to achieve a friction moment leap with axially curved lugs (53) in a peripheral direction on the side of the ends of at least one of the first damper springs (17).

11. Clutch disc according to Claim 10 characterised in that friction control discs (57, 59) are provided on axially both sides of the hub disc (5), and in that lugs (63) protrude axially from at least one (57) of the friction control discs, the lugs engaging in openings (65) of the other friction control disc (59) and connecting the friction control discs (57, 59) to one another non-rotatably.

12. Clutch disc according to Claim 11, characterised in that the friction control discs (57, 59) lie in the force path of an axially acting spring (51a) arranged axially between one (25a) of the side discs and the adjacent guide part (31a) and loading the guide part (31a) against the hub disc (5a).

13. Clutch disc according to Claim 12, characterised in that each of the guide parts (31a) has an axially protruding collar (33a) on which the adjacent side disc (23a, 25a) is radially guided, in that noses (37a) protrude radially outwards for the non-rotatable connection of each collar (33a), said noses engaging in recesses (39a) of the adjacent side disc (23a, 25a), and in that the axially acting spring (51a) is arranged axially between one (57) of the friction control discs and the adjacent guide part (31a).

14. Clutch disc according to Claim 11, characterised in that the lugs (63b) are provided with stop shoulders (75) by means of which the friction control discs (57b, 59b) axially support one another, and in that a first axially acting spring (67) is held axially between one of the guide parts (31b) and the adjacent side disc (25b) and a second axially acting spring (69) is held axially between one (59b) of the friction control discs and the adjacent side disc (23b).

15. Clutch disc according to Claim 14, characterised in that each of the guide parts (31b) has an axially protruding collar (33b) on which the adjacent side disc (23b, 25b) is radially guided, in that for the non-rotatable connection of each collar (33b) noses (37b) protrude radially outwards which engage in recesses (39b) of the adjacent side disc (23b, 25b), in that an axially normal extending stop surface (71) adjoins the noses (37b) and on which the first axially acting spring (67) rests on axially one side of the hub disc (5) and the side disc (23b) present rests on the other side of the hub disc (5), and in that a guide shoulder (73) adjoins the stop surface (71) radially outwards, on which step the friction control discs (57b, 59) and the second axially acting spring (69) are radially guided.

16. Clutch disc according to one of Claims 1 to 8, characterised in that the guide parts (31c) are rotatable both in relation to the radially inner part (9c) of the disc element (5) and also in relation to the side discs (23c, 25c) and comprise at least one pair of radially outwards protruding noses (85) which pairwise each enclose one of the first damper springs (17c) between them, whereby the first damper springs (17c) are disposed without play in a peripheral direction in the windows (19c, 21c) of the side discs (23c, 25c) and between the nose pair (85), and with a play corresponding to the angle of rotation of the operation without load range in a peripheral direction in the window (13c) of the disc element (5c).

17. Clutch disc according to Claim 16, characterised in that the guide parts (31c) comprise a body formed as a plastic moulded part resting on the radially inner part (9c) of the disc element (5c), and in that the noses (85) are part of a sheet-metal body (83) made of metal, supported on the plastic moulded part.

18. Clutch disc according to Claim 17, characterised in that the sheet-metal body (83) is formed as an annular disc part from which the noses (85) protrude radially outwards and which for the formation of a friction surface (87) of the first friction means protrudes axially over the plastic moulded part in a region radially between the first damper springs (17c) and the hub (3c) to the adjacent side disc (23c, 25c).

19. Clutch disc according to Claim 18, characterised in that the sheet-metal body (83) is curved radially on both sides of the friction surface (87) towards the disc element.

20. Clutch disc according to Claim 18 or 19, characterised in that the friction surface is formed by several elevations (87) distributed in a peripheral direction and pressed out of the sheet-metal body.

21. Clutch disc according to one of Claims 18 to 19, characterised in that the recesses (47c) of the guide parts (31c) have control notches for the second springs, which are both restricted by the plastic moulded part and the sheet-metal body.

## Revendications

1. Disque d'embrayage pour un embrayage à friction d'un véhicule automobile, comportant
un moyeu (3) concentrique à un axe de rotation (1) avec un élément de disque (5) faisant saillie sensiblement radialement
avec une partie (9) radialement intérieure reliée fixement au moyeu (3) et une partie (11) radialement extérieure, reliée fixement ou accouplée par une denture avec jeu de rotation, avec la partie (9) radialement intérieure,
deux flasques (23, 25) placés sur des côtés se faisant face axialement de l'élément de disque (5), reliés fixement entre eux et tournant par rapport à l'élément de disque (5) autour de l'axe de rotation (1), dont l'un forme un support de garniture de friction,
plusieurs premiers ressorts amortisseurs (17), dimensionnés pour le fonctionnement en charge, maintenus dans des fenêtres (13, 19, 21) de la partie (11) radialement extérieure de l'élément de disque (5) d'une part et des deux flasques (23, 25) d'autre part, qui accouplent les flasques (23, 25) de manière élastique en rotation avec la partie extérieure (11) de l'élément de disque (5),
deux éléments de guidage (31) annulaires placés sur des côtés se faisant face axialement de l'élément de disque (5), mais entre les flasques (23, 25), pouvant tourner par rapport au moyeu (3) et à l'élément de disque (5), plusieurs seconds ressorts amortisseurs (45), dimensionnés pour le ralenti, placés dans des fenêtres (43c) de la partie (9) radialement intérieure de l'élément de disque (5) d'une part et dans des évidements (47) des deux éléments de guidage (31) d'autre part, qui accouplent la partie (9) radialement intérieure de l'élément de disque (5), de manière élastique en rotation, avec les éléments de guidage (31) et
des premiers moyens de friction (49 ; 57, 59 ; 41), dimensionnés pour le fonctionnement en charge, agissant entre les flasques (23, 25) et l'élément de disque (5), caractérisé en ce que
les deux éléments de guidage (31) sont des pièces de forme en matière plastique et forment en même temps des surfaces de friction (41) de seconds moyens de friction (41), dimensionnés pour le ralenti, par l'intermédiaire desquels ils prennent appui contre la partie (9) radialement intérieure de l'élément de disque (5) et en ce que les éléments de guidage (31) fixent axialement les flasques (23, 25) à la partie (9) radialement intérieure de l'élément de disque (5) et ainsi au moyeu (3).

2. Disque d'embrayage pour un embrayage à friction de véhicule automobile, comportant
un moyeu (3) concentrique à un axe de rotation (1) avec un élément de disque (5) faisant saillie sensiblement radialement
avec une partie (9) radialement intérieure reliée fixement au moyeu (3) et une partie (11) radialement extérieure, reliée fixement ou accouplée par une denture avec jeu de rotation, avec la partie (9) radialement intérieure,
deux flasques (23, 25) placés sur des côtés se faisant face axialement de l'élément de disque (5), reliés fixement entre eux et tournant par rapport à l'élément de disque (5) autour de l'axe de rotation (1), dont l'un forme un support de garniture de friction,
plusieurs premiers ressorts amortisseurs (17), dimensionnés pour le fonctionnement en charge, maintenus dans des fenêtres (13, 19, 21) de la partie (11) radialement extérieure de l'élément de disque (5) d'une part et des deux flasques (23, 25) d'autre part, qui accouplent les flasques (23, 25) de manière élastique en rotation avec la partie extérieure (11) de l'élément de disque (5),
deux éléments de guidage (31) annulaires placés sur des côtés se faisant face axialement de l'élément de disque (5), mais entre les flasques (23, 25), pouvant tourner par rapport au moyeu (3) et à l'élément de disque (5), plusieurs seconds ressorts amortisseurs (45), dimensionnés pour le ralenti, placés dans des fenêtres (43c) de la partie (9) radialement intérieure de l'élément de disque (5) d'une part et dans des évidements (47) des deux éléments de guidage (31) d'autre part, qui accouplent la partie (9) radialement intérieure de l'élément de disque (5), de manière élastique en rotation, avec les éléments de guidage (31) et
des premiers moyens de friction (49 ; 57, 59 ; 41), dimensionnés pour le fonctionnement en charge, agissant entre les flasques (23, 25) et l'élément de disque (5), caractérisé en ce que
les deux éléments de guidage (31) sont des pièces de forme en matière plastique et sont guidés en rotation chacun contre une surface de guidage (35) extérieure, cylindrique, du moyeu (3), et sont appuyés par l'intermédiaire de seconds moyens de friction (41), dimensionnés pour le ralenti, sur la partie intérieure (9) de l'élément de guidage (5) et en ce que les éléments de guidage (31) guident respectivement axialement et radialement les flasques (23, 25) contre la partie (9) radialement intérieure de l'élément de disque (5) et la surface de guidage (35) cylindrique.

3. Disque d'embrayage selon la revendication 2, caractérisé en ce que les éléments de guidage (31), réalisés sous la forme de pièces de forme en matière plastique, forment en même temps des surfaces de friction (41) d'au moins les seconds moyens de friction.

4. Disque d'embrayage selon la revendication 3, caractérisé en ce que les surfaces de friction (41b ; 41c) des seconds moyens de friction sont formées par un relief de la surface frontale axiale, voisine de l'élément de disque (5b ; 5c), des éléments de guidage (31b ; 31c).

5. Disque d'embrayage selon la revendication 3 ou 4, caractérisé en ce que chacun des éléments de guidage (31) possède un épaulement (33) s'éloignant de l'élément de disque, sur lequel est monté radialement le flasque (23, 25) voisin.

6. Disque d'embrayage selon l'une des revendications 1 à 5, caractérisé en ce que les deux éléments de guidage (31) sont identiques.

7. Disque d'embrayage selon l'une des revendications 1 à 6, caractérisé en ce que les évidements (47) des éléments de guidage (31), destinés à l'accouplement des seconds ressorts amortisseurs (45), sont des poches qui sont fermées vers le flasque (23, 25) adjacent respectif.

8. Disque d'embrayage selon l'une des revendications 1 à 7, caractérisé en ce qu'un ressort (51 ; 51a ; 51c ; 67), agissant axialement, est placé axialement entre l'un des éléments de guidage (31) et le flasque (25) adjacent à cet élément de guidage (31), lequel ressort précontraint l'autre flasque (23) relié fixement à ce flasque (25) contre l'autre des deux éléments de guidage (31), et précontraint aussi les deux éléments de guidage (31) contre la partie (9) radialement intérieure de l'élément de disque (5).

9. Disque d'embrayage selon l'une des revendications 1 à 8, caractérisé en ce que la partie (9) radialement intérieure et la partie (11) radialement extérieure de l'élément de disque sont formées par un disque de moyeu (5) d'une seule pièce, relié fixement au moyeu et en ce que chacun des éléments de guidage (31) est lié solidairement en rotation au flasque (23, 25) qui lui est adjacent.

10. Disque d'embrayage selon la revendication 9, caractérisé en ce que les premiers moyens de friction, dimensionnés pour le fonctionnement en charge comportent au moins un disque de commande de friction (49 ; 57, 59) tournant par rapport au flasque (25), placé entre l'un des flasques (25) et l'élément de guidage (31) adjacent à celui-ci, lequel disque de commande s'engage, pour produire un saut de couple de friction, par des pattes (53) repliées axialement dans la direction périphérique, sur le côté des extrémités frontales d'au moins l'un des premiers ressorts amortisseurs (17), dans la fenêtre (13), associée à ces premiers ressorts amortisseurs (17), du disque de moyeu (5).

11. Disque d'embrayage selon la revendication 10, caractérisé en ce que des disques de commande de friction (57, 59) sont prévus sur les deux côtés axiaux du disque de moyeu (5) et en ce que d'au moins l'un (57) des disques de commande de friction font saillie axialement des pattes (63), qui s'engagent dans des ouvertures (65) de l'autre disque de commande de friction (59) et les disques de commande de friction (57, 59) sont liés solidairement en rotation entre eux.

12. Disque d'embrayage selon la revendication 11, caractérisé en ce que les disques de commande de friction (57, 59) se situent dans la ligne de transmission des forces d'un ressort (51a) agissant axialement, placé axialement entre l'un (25a) des flasques et l'élément de guidage (31a) voisin, contraignant les éléments de guidage (31a) contre le disque de moyeu (5a).

13. Disque d'embrayage selon la revendication 12, caractérisé en ce que chacun des éléments de guidage (31a) présente un épaulement (33a) faisant saillie axialement, contre lequel est guidé radialement le flasque (23a, 25a) adjacent, en ce que pour la liaison solidaire en rotation de chaque épaulement (33a) font saillie radialement vers l'extérieur des ergots (37a), qui s'engagent dans des découpes (39a) du flasque (23a, 25a) adjacent et en ce que le ressort (51a) agissant axialement est placé axialement entre l'un (57) des disques de commande de friction et l'élément de guidage (31a) adjacent.

14. Disque d'embrayage selon la revendication 11, caractérisé en ce que les pattes (63b) sont pourvues d'épaulements de butée (75), par lesquels les disques de commande de friction (57b, 59b) prennent appui axialement les uns contre les autres et en ce qu'un premier ressort (67) agissant axialement est comprimé axialement entre l'un des éléments de guidage (31b) et le flasque (25b) adjacent et un second ressort (69) agissant axialement est comprimé axialement entre l'un (59b) des disques de commande de friction et le flasque (23b) adjacent.

15. Disque d'embrayage selon la revendication 14, caractérisé en ce que chacun des éléments de guidage (31b) présente un épaulement (33b) faisant saillie axialement contre lequel est guidé radialement le flasque (23b, 25b) adjacent, en ce que pour la liaison solidaire en rotation de chaque épaulement (33b) font saillie radialement vers l'extérieur des ergots (37b), qui s'engagent dans des évidements (39b) du flasque (23b, 25b) adjacent, en ce qu'aux ergots (37b) fait suite une surface de butée (71) normale à l'axe et sur un côté axial du disque de moyeu (5) s'applique le premier ressort (67) agissant axialement et sur l'autre côté du disque de moyeu (5) s'applique le flasque (23b) se trouvant à cet endroit et en ce qu'à la surface de butée (71) fait suite radialement à l'extérieur un épaulement de guidage (73) sur lequel sont guidés radialement les disques de commande de friction (57b, 59) et le second ressort (69) agissant axialement.

16. Disque d'embrayage selon l'une des revendications 1 à 8, caractérisé en ce que les éléments de guidage (31c) peuvent tourner aussi bien par rapport à la partie (9c) radialement intérieure de l'élément de disque (5) que par rapport aux flasques (23c, 25c) et comportent au moins une paire d'ergots (85) faisant saillie radialement vers l'extérieur, qui enferment entre eux, deux par deux, l'un des premiers ressorts amortisseurs (17c), ces premiers ressorts amortisseurs (17c) étant montés sans jeu dans la direction périphérique, dans les fenêtres (19c, 21c) des flasques (23c, 25c) et entre la paire d'ergots (85) et sont montés avec un jeu correspondant à l'angle de rotation du domaine de ralenti, dans la direction périphérique, dans la fenêtre (13c) de l'élément de disque (5c).

17. Disque d'embrayage selon la revendication 16, caractérisé en ce que les éléments de guidage (31c) comportent un corps de base réalisé sous la forme d'une pièce de forme en matière plastique, s'appliquant contre la partie (9c) radialement intérieure de l'élément de disque (5c) et en ce que les ergots (85) font partie d'un corps métallique en tôle (83) maintenu contre la pièce de forme en matière plastique.

18. Disque d'embrayage selon la revendication 17, caractérisé en ce que le corps en tôle (83) est une pièce en forme de disque annulaire, de laquelle les ergots (85) font saillie radialement vers l'extérieur, et qui dépasse axialement vers le flasque (23c, 25c) voisin, au-delà de la pièce de forme en matière plastique, pour former une surface de friction (87) des premiers moyens de friction, dans une zone située radialement entre les premiers ressorts amortisseurs (17c) et le moyeu (3c).

19. Disque d'embrayage selon la revendication 18, caractérisé en ce que le corps en tôle (83) est cintré radialement des deux côtés de la surface de friction (87), en direction de l'élément de disque.

20. Disque d'embrayage selon la revendication 18 ou 19, caractérisé en ce que la surface de friction est formée par plusieurs reliefs (87) répartis dans la direction périphérique, repoussés du corps en tôle.

21. Disque d'embrayage selon l'une des revendications 18 ou 19, caractérisé en ce que les évidements (47c) des éléments de guidage (31c) possèdent des bords de commande pour les seconds ressorts, qui sont limités conjointement par la pièce de forme en matière plastique et le corps en tôle.
